# EUROPÄISCHE PATENTANMELDUNG

(11) **EP 1 612 166 A2**
(43) Veröffentlichungstag der Anmeldung: **04.01.2006**
(21) Anmeldenummer: 05011020.4
(22) Anmeldetag: 20.05.2005
(51) Int. Cl.: B65G 69/04, B65G 69/16

(54) **Befüllung eines Behälters mit Tabakgut**

(30) Priorität: 30.06.2004 DE 102004031892
(71) Anmelder: Hauni Primary GmbH, 21033 Hamburg (DE)
(72) Erfinder: Hagemann, Fritz, 22303 Hamburg (DE); Seide, Ulf, 20255 Hamburg (DE)
(74) Vertreter: Grebner, Christian Georg Rudolf

(57) **Zusammenfassung**

Verfahren und Einrichtung zum Befüllen eines Behälters (20) mit Tabakgut, wobei das Tabakgut mittels einer Förderrichtung (15) angeliefert und über eine Verteilrutsche (30) in den Behälter (20) eingefüllt wird, wobei während des Befüllens des Behälters zwischen der Verteilrutsche (30) und dem Behälter (20) eine Relativbewegung ausgeführt wird.

## Beschreibung

Die Erfindung betrifft ein Verfahren zum Befüllen eines Behälters mit Tabakgut, wobei das Tabakgut mittels einer Fördereinrichtung angeliefert wird. Ferner betrifft die Erfindung eine Einrichtung zum Befüllen eines Behälters mit Tabakgut umfassend eine Fördereinrichtung zur Anlieferung des Tabakguts.

Gemäß dem Stand der Technik wird Tabakgut bzw. ein Produktstrom der Tabak verarbeitenden Industrie über ein Förderband direkt in Behälter oder andere Gebinde eingebracht. Hierbei kann das Förderband in Förderrichtung eine oszillierende Bewegung während der Befüllung des Behälters ausführen. Darüber hinaus ist bekannt, dass für die Verteilung des Tabakguts in einem Behälter zwei rechtwinklig zueinander bewegliche Förderer eingesetzt werden. Insgesamt sind die Vorrichtungen in ihrer Konstruktion aufwendig.

Beim Befüllvorgang fällt das Tabakgut frei über eine große Distanz in den Behälter und wird beim anschließenden Auftreffen auf den Behälterboden bzw. auf das eingefüllte Tabakgut stark mechanisch belastet. Dadurch tritt beim eingefüllten Tabakgut eine unerwünschte Zerkleinerung auf. Außerdem wird bei dieser freien Übergabe des Tabakguts vom Förderband in einen Behälter Staub aufgewirbelt, der zur Verschmutzung der angrenzenden Einrichtungen führt.

Ausgehend von diesem Stand der Technik ist es Aufgabe der vorliegenden Erfindung, beim Einfüllen von Tabakgut in Behälter oder Gebinde die mechanische Belastung des Tabakguts herabzusetzen bzw. zu verhindern, wobei es gleichzeitig möglich sein soll, die Entstehung von Staub zu vermindern und gleichzeitig eine gleichmäßige Befüllung im Behälter zu erreichen.

Gelöst wird diese Aufgabe mittels eines Verfahrens zum Befüllen eines Behälters mit Tabakgut, wobei das Tabakgut mittels einer Fördereinrichtung angeliefert wird, das dadurch weitergebildet wird, dass das Tabakgut über eine Verteilrutsche in den Behälter eingefüllt wird, wobei während des Befüllens zwischen der Verteilrutsche und dem Behälter eine Relativbewegung ausgeführt wird.

Die Erfindung beruht auf dem Gedanken, dass die Ausbreitung des Tabakguts im Behälter auf einer Grundfläche erfolgt, die größer ist als der Querschnitt des Tabakstroms. Hierbei wird mittels der Verteilrutsche als eine Art Einfüllhilfe das Tabakgut schonend in den Behälter eingebracht, wobei die Entstehung von Staub vermieden oder herabgesetzt wird. Gleichzeitig wird in Folge der Relativbewegung zwischen der Verteilrutsche und dem Behälter eine gleichmäßige Befüllung des Behälters erreicht. Als Relativbewegung wird beispielsweise eine Auslenkung der Verteilrutsche zum ortsfesten Behälter bzw. eine Bewegung des Behälters zur ortsfesten Verteilrutsche verstanden. Selbstverständlich ist es auch möglich, dass für die Befüllung eine Bewegung sowohl von der Verteilrutsche als auch vom Behälter ausgeführt wird.

Zu einer sanften Einführung des Tabakguts in den Behälter ist insbesondere die Fördereinrichtung, z. B. ein Förderband, ortsfest angeordnet, d. h. das Förderband führt keine oszillierende Bewegung aus. Damit dient das Förderband ausschließlich der Zuförderung des Tabakguts zur Verteilrutsche, über die das Tabakgut in den Behälter eingeleitet wird.

Darüber hinaus ist zur Ausführung einer Relativbewegung zwischen der Verteilrutsche und dem Behälter vorgesehen, dass die Verteilrutsche um wenigstens eine Schwenkachse geschwenkt wird, so dass eine gleichmäßige Verteilung des Tabakguts im Behälter erreicht wird.

Gemäß einer bevorzugten Ausführungsform wird der Behälter während der Befüllung, vorzugsweise nach einem vorbestimmten Changier-Modus, bewegt. Hierdurch wird eine zusätzliche Relativbewegung zwischen dem Behälter und der Verteilrutsche erreicht und gleichzeitig eine gleichmäßige Verteilung des Tabakguts realisiert. Unter einem vorbestimmten Changier-Modus wird eine bevorzugte Bewegungsart oder ein vorbestimmtes Bewegungsmuster des Behälters beim Einfüllen des Tabaks verstanden.

Beispielsweise stellt eine oszillierende Bewegung des Behälters zwischen zwei Umkehrpunkten einen Bewegungs-Modus oder Changier-Modus dar. Der Bewegungsmodus des Behälters hängt beispielsweise von der Geometrie des Behälters und/oder vom einzufüllenden Tabakgut ab.

Insbesondere wird der Behälter mittels einer Rollenbahn und/oder mittels eines Antriebs bewegt. Beispielsweise wird ein Antrieb durch eine Mitnehmereinrichtung, z. B. Drehteller, realisiert, so dass der Behälter frei beweglich in Bezug auf die Verteilrutsche verfahrbar ist.

Besonders bevorzugt ist es, wenn die Verteilrutsche und/oder der Behälter jeweils oszillierend bewegt werden.

Die Verteilrutsche ist vorzugsweise als Verteilschacht oder schachartig ausgebildet. Hierfür ist die Verteilrutsche mehrseitig, insbesondere dreiseitig oder vierseitig, ausgebildet ist.

Außerdem wird gemäß einer vorteilhaften Weiterbildung vorgeschlagen, dass der Befüllungszustand des Behälters überwacht wird.

Um beispielsweise eine Verdichtung des Tabakmaterials im Behälter zu erreichen, ist es erforderlich, den Behälter zu überfüllen. Hierzu wird ein Kragen auf den Behälter, insbesondere vor der Befüllung des Behälters, angeordnet.

Ferner ist es bevorzugt, wenn das Tabakgut im Behälter, insbesondere nach der Befüllung, verdichtet wird.

Des Weiteren ist es günstig, wenn nach der Verdichtung des Tabakguts der Kragen vom Behälter entfernt wird.

In einer bevorzugten Ausführungsform des Verfahrens wird das Tabakgut mittels einer Gewichtsbestimmungseinrichtung, insbesondere Bandwaage, dosiert.

Die Aufgabe wird ferner gelöst durch eine Einrichtung zum Befüllen eines Behälters mit Tabakgut umfassend eine Fördereinrichtung zur Anlieferung des Tabakguts, die dadurch weitergebildet wird, dass das Tabakgut über eine Verteilrutsche in Behälter einfüllbar ist und während der Befüllung zwischen der Verteilrutsche und dem Behälter eine Relativbewegung ausführbar ist.

Eine gleichmäßige Befüllung des Behälters wird erreicht, wenn die Verteilrutsche um wenigstens eine Schwenkachse verschwenkbar ist.

Ferner wird eine Relativbewegung zwischen der Verteilrutsche und dem Behälter ausgeführt, wenn der Behälter während der Befüllung, vorzugsweise nach einem vorbestimmten Changier-Modus, bewegbar ist.

Dazu ist vorgesehen, dass der Behälter mittels einer Rollenbahn und/oder mittels eines Antriebs bewegbar ist.

In einer Weiterbildung der Einrichtung ist wenigstens ein Füllstandsensor zur Überwachung des Befüllungszustands des Behälters vorgesehen.

Außerdem ist vorteilhafterweise eine Kragenzuführeinrichtung zur Zuführung und/oder Anordnung eines Kragens auf den Behälter vorgesehen.

Um das Tabakgut in einem überfüllten Behälter zu verdichten, ist eine Verdichteinrichtung zur Verdichtung des eingefüllten Tabakguts vorgesehen.

Weiterhin ist es bevorzugt, wenn eine Dosiereinrichtung, insbesondere Bandwaage, zur Bestimmung der Menge bzw. Masse des einzufüllenden bzw. eingefüllten Tabakguts in einem Behälter vorgesehen ist.

Die Erfindung wird nachstehend und ohne Beschränkung des allgemeinen Erfindungsgedankens anhand der Zeichnungen exemplarisch beschrieben, wobei bezüglich aller im Text nicht näher erläuterten erfindungsgemäßen Einzelheiten auf die Zeichnungen ausdrücklich verwiesen wird. Es zeigen:
- Fig. 1: eine perspektivische Ansicht einer erfindungsgemäßen Befüllungseinrichtung für einen Behälter und
- Fig. 2: eine perspektivische Darstellung einer weiteren Ausführungsform einer Befülleinrichtung für einen Behälter.

In den folgenden Figuren sind die gleichen oder gleichartigen Elemente bzw. entsprechenden Teile mit denselben Bezugsziffern bezeichnet, so dass von einer erneuten Vorstellung abgesehen wird.

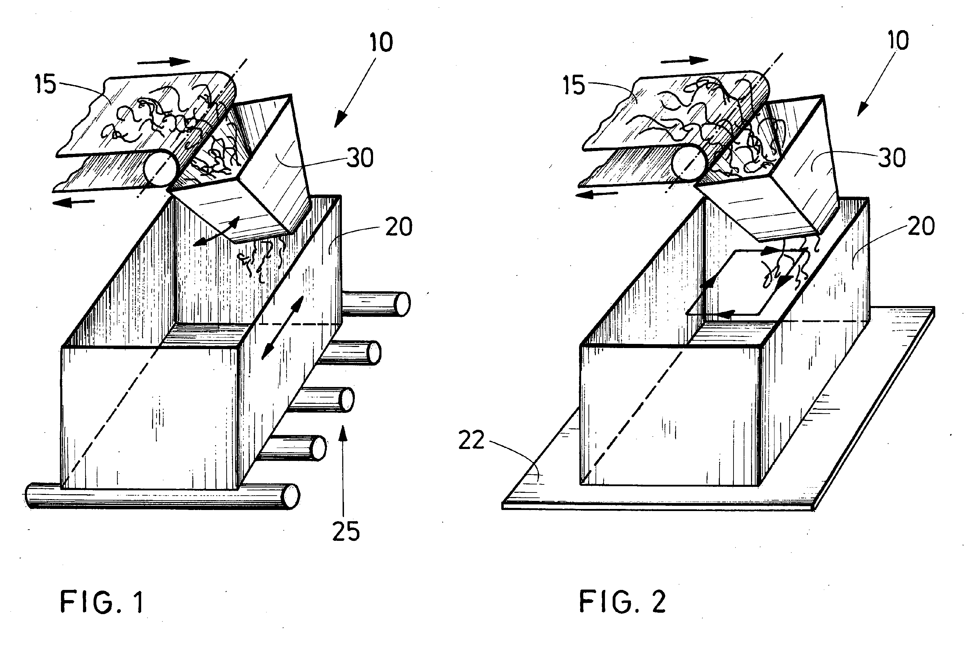

In Fig. 1 ist schematisch eine Befülleinrichtung 10 für einen Behälter 20 mit Tabakgut in einer perspektivischen Teilansicht gezeigt.

Der Behälter 20 ist auf einer Rollenbahn 25 angeordnet und mittels der Rollenbahn 25, insbesondere oszillierend, verfahrbar. Oberhalb des Behälters 20 ist ein ortsfestes Transportband 15 angeordnet, auf das Tabakgut aufgebracht ist. Das Tabakgut wird vom Förderband 15 zu einer Verteilrutsche 30 gefördert, die am Ende des Förderbands 15 angeordnet ist. Die schachtartige Verteilrutsche 30 grenzt unmittelbar an das Förderband 15 und nimmt das zugeförderte Tabakgut auf. Anschließend wird das Tabakgut durch die Verteilrutsche 30 geleitet und in den Behälter 20 eingebracht.

Um das Tabakgut gleichmäßig im Behälter 20 anzuordnen, ist die Verteilrutsche 30 um eine Schwenkachse schwenkbar. Beim Befüllen des Behälters 20 wird die Verteilrutsche 30 als Verteilschacht um die Schwenkachse bewegt.

Gleichzeitig zur Verschwenkung der Verteilrutsche 30 wird der Behälter 20 von der Rollenbahn 25 oszillierend bewegt. Durch eine weitgehend rutschende Führung des Tabakguts in der Verteilrutsche 30 wird die freie Fallhöhe des zugeförderten Tabakguts vermindert, wodurch auch die Menge von unerwünschter mitgerissener Luft im Tabakgutstrom gering gehalten wird.

In einer alternativen Ausführungsform kann die Verteilrutsche aus flexiblem Material bestehen, wobei die Verteilrutsche so bewegt wird, dass eine Relativbewegung in Bezug auf einen Behälter ausgeführt wird. Des Weiteren kann die Verteilrutsche teleskopartig oder aufrollbar ausgebildet sein.

In Fig. 2 ist eine alternative Ausführungsform einer Befülleinrichtung 10 dargestellt, wobei der Behälter 20 auf einer Trägerplatte 22 angeordnet ist. Die Trägerplatte 22 selbst ist beispielsweise auf einer Kugelbahn (hier nicht dargestellt) aufgelegt, so dass der Behälter 20 unterhalb der ortsfesten Verteilrutsche 30 frei beweglich ist. Des Weiteren ist für die Trägerplatte 22 eine (hier nicht dargestellte) Mitnehmereinrichtung vorgesehen, so dass der Behälter 20 nach einem bestimmten Changier-Modus unterhalb der Verteilrutsche 30 bewegt wird. Mittels der eingezeichneten Pfeile wird ein bevorzugter bzw. vorbestimmter Changier-Modus des Behälters 20 angedeutet.

### Bezugszeichenliste

- 10: Befülleinrichtung
- 15: Förderband
- 20: Behälter
- 22: Trägerplatte
- 25: Rollenbahn
- 30: Verteilrutsche

## Patentansprüche

1. Verfahren zum Befüllen eines Behälters (20) mit Tabakgut, wobei das Tabakgut mittels einer Fördereinrichtung (15) angeliefert wird, **dadurch gekennzeichnet, dass** das Tabakgut über eine Verteilrutsche (30) in den Behälter (20) eingefüllt wird, wobei während des Befüllens zwischen der Verteilrutsche (30) und dem Behälter (20) eine Relativbewegung ausgeführt wird.

2. Verfahren nach Anspruch 1, **dadurch gekennzeichnet, dass** die Verteilrutsche (30) um wenigstens eine Schwenkachse geschwenkt wird.

3. Verfahren nach Anspruch 1 oder 2, **dadurch gekennzeichnet, dass** der Behälter (20) während der Befüllung, vorzugsweise nach einem vorbestimmten Changier-Modus, bewegt wird.

4. Verfahren nach einem oder mehreren der Ansprüche 1 bis 3, **dadurch gekennzeichnet, dass** der Behälter (20) mittels einer Rollenbahn (25) oder mittels eines Antriebs bewegt wird.

5. Verfahren nach einem oder mehreren der Ansprüche 1 bis 4, **dadurch gekennzeichnet, dass** die Verteilrutsche (30) und/oder der Behälter (20) jeweils oszillierend bewegt werden.

6. Verfahren nach einem oder mehreren der Ansprüche 1 bis 5, **dadurch gekennzeichnet, dass** der Befüllungszustand des Behälters (20) überwacht wird.

7. Verfahren nach einem oder mehreren der Ansprüche 1 bis 6, **dadurch gekennzeichnet, dass** ein Kragen auf den Behälter, insbesondere vor Befüllung des Behälters (20), angeordnet wird.

8. Verfahren nach einem oder mehreren der Ansprüche 1 bis 7, **dadurch gekennzeichnet, dass** das Tabakgut im Behälter (20), insbesondere nach Befüllung, verdichtet wird.

9. Verfahren nach einem oder mehreren der Ansprüche 1 bis 8, **dadurch gekennzeichnet, dass** nach der Verdichtung des Tabakguts der Kragen vom Behälter (20) entfernt wird.

10. Verfahren nach einem oder mehreren der Ansprüche 1 bis 9, **dadurch gekennzeichnet, dass** das Tabakgut mittels einer Gewichtsbestimmungseinrichtung, insbesondere Bandwaage, dosiert wird.

11. Einrichtung (10) zum Befüllen eines Behälters (20) mit Tabakgut umfassend eine Fördereinrichtung (15) zur Anlieferung des Tabakguts, **dadurch gekennzeichnet, dass** das Tabakgut über eine Verteilrutsche (30) in den Behälter (20) einfüllbar ist und dass während der Befüllung zwischen der Verteilrutsche (30) und dem Behälter (20) eine Relativbewegung ausführbar ist.

12. Einrichtung (10) nach Anspruch 11, **dadurch gekennzeichnet, dass** die Verteilrutsche (30) um wenigstens eine Schwenkachse schwenkbar ist.

13. Einrichtung (10) nach Anspruch 11 oder 12, **dadurch gekennzeichnet, dass** die Verteilrutsche (30) als Verteilschacht ausgebildet ist.

14. Einrichtung nach einem der Ansprüche 11 bis 13, **dadurch gekennzeichnet, dass** die Verteilrutsche (30) mehrseitig, insbesondere dreiseitig oder vierseitig, ausgebildet ist.

15. Einrichtung (10) nach einem oder mehreren der Ansprüche 11 bis 14, **dadurch gekennzeichnet, dass** der Behälter (20) während der Befüllung, vorzugsweise nach einem vorbestimmten Changier-Modus, bewegbar ist.

16. Einrichtung (10) nach einem oder mehreren der Ansprüche 11 bis 15, **dadurch gekennzeichnet, dass** der Behälter (20) mittels einer Rollenbahn (15) und/oder mittels eines Antriebs bewegbar ist.

17. Einrichtung (10) nach einem oder mehreren der Ansprüche 11 bis 16, **dadurch gekennzeichnet, dass** wenigstens ein Füllstandsensor zur Überwachung des Befüllungszustands des Behälters (20) vorgesehen ist.

18. Einrichtung (10) nach einem oder mehreren der Ansprüche 11 bis 17, **dadurch gekennzeichnet, dass** eine Kragenzuführeinrichtung zur Zuführung und/oder Anordnung eines Kragens auf den Behälter (20) vorgesehen ist.

19. Einrichtung (10) nach einem oder mehreren der Ansprüche 11 bis 18, **dadurch gekennzeichnet, dass** eine Verdichtereinrichtung zur Verdichtung des eingefüllten Tabakguts vorgesehen ist.

20. Einrichtung (10) nach einem oder mehreren der Ansprüche 11 bis 19, **dadurch gekennzeichnet, dass** eine Dosiereinrichtung, insbesondere Bandwaage, zur Bestimmung der Menge bzw. Masse des einzufüllenden bzw. eingefüllten Tabakguts in einem Behälter (20) vorgesehen ist.
